# DEMANDE DE BREVET EUROPEEN

(11) **EP 4 745 096 A2**
(43) Date de publication de la demande: **20.05.2026**
(21) Numéro de dépôt: 26160191.8
(22) Date de dépôt: 18.11.2021
(51) Int. Cl.: C03B 5/235

(54) **PROCÉDÉ ET FOUR HYDRIDE POUR LA FABRICATION DE VERRE COMPORTANT UNE ZONE DE FUSION ÉLECTRIQUE**

(62) Demande divisionnaire de: 21306609.5
(71) Demandeur: Saint-Gobain Glass France, 92400 Courbevoie (FR)
(72) Inventeur: SAGET, Aurélien, 92400 COURBEVOIE (FR); DE DIANOUS, Philippe, 92400 COURBEVOIE (FR); LE VERGE, Arnaud, 92400 COURBEVOIE (FR); COMBES, Jean-Marie, 92400 COURBEVOIE (FR)
(74) Mandataire: Saint-Gobain Recherche

(57) **Abrégé**

L'invention concerne un procédé de fabrication de verre dans un four hybride (10), en particulier pour alimenter une unité de flottage du verre sur un bain de métal fondu, et un tel four hybride (10) caractérisé par le fait de comporter d'amont en aval :
- une zone (100) de fusion électrique à voute froide (140) comportant des électrodes (110) pour fondre un mélange vitrifiable afin d'obtenir un bain (130) de verre ;
- une zone (200) d'affinage et d'homogénéisation à voute chaude, comportant une première courroie (210) de convection et une deuxième courroie (220) de convection ; et
- une zone (300) de refroidissement du verre formée par un bassin (310) de conditionnement qui, parcourue par ladite deuxième courroie (220) de convection, comporte au moins un canal (400) d'écoulement.

## Description

### Domaine technique de l'invention

L'invention concerne un procédé et un four hydride pour la fabrication de verre comportant une zone de fusion électrique.

L'invention concerne plus particulièrement un four hydride de fabrication de verre comportant en outre une zone de fusion électrique à voûte froide pour fondre un mélange vitrifiable à laquelle est associée une zone d'affinage et d'homogénéisation à voûte chaude comportant deux courroies de convection du verre afin d'obtenir un verre de haute qualité.

L'invention concerne également un procédé de fabrication de verre dans un tel four hybride pour la fabrication de verre.

Le procédé et le four hybride pour la fabrication de verre selon l'invention délivre un verre de haute qualité qui est en particulier apte à alimenter en verre une unité de flottage du verre sur un bain de métal fondu destinée à fabriquer du verre plat.

### Arrière-plan technique

On connaît de l'état de la technique différents exemples de conception de fours pour la fabrication de verre qui dépendent notamment du produit à fabriquer, c'est-à-dire de la mise en forme finale du verre.

Ainsi, on distingue différentes conceptions de four selon que la production envisagée concerne des fibres de verre, le formage industriel de verre creux ou encore celui de verre plat.

L'un des enjeux industriels dans la conception des fours de verrerie est de pouvoir obtenir un verre dont les exigences en matière de qualité dépendent du produit, à cet égard la production de verre plat est comparativement l'une des plus exigeante.

Produit en très grande quantité, le verre plat est utilisé dans de nombreuses applications en raison de son caractère polyvalent, notamment largement utilisé dans les secteurs de l'électronique (écrans plats) ou encore de la construction et de l'automobile dans lesquels ce verre est susceptible d'être transformé suivant une grande variété de technique (bombage, trempe, etc.), constituant ainsi un verre de base pour tout un ensemble de produits verriers.

A proportion des enjeux tant de qualité que de quantité, la présente invention vise donc tout particulièrement la fabrication de verre pour le formage industriel d'un tel verre plat, lequel verre est conventionnellement obtenu au moyen d'une unité de flottage du verre sur un bain de métal fondu, généralement de l'étain, raison pour laquelle un tel verre plat est encore appelé verre flotté ou « float » selon le terme anglais.

Pour la fabrication de verre plat, il est attendu de pouvoir alimenter l'unité de flottage ou « float » avec un verre de haute qualité, c'est-à-dire un verre renfermant le moins d'infondus et de bulles possibles, soit généralement un verre présentant moins de 0,5 bulle / litre.

En effet, la qualité du verre est notamment, mais non exclusivement, déterminée en fonction du nombre de bulle(s) présente(s) dans le verre qui est exprimé en « bulle par litre ». Ainsi, la qualité d'un verre est considérée comme d'autant plus élevée que le nombre de bulle(s) par litre présente(s) dans le verre est particulièrement bas, voire infime.

Par ailleurs, on rappelle que la présence de bulles (ou de défauts gazeux) dans le verre est inhérente au procédé de fabrication du verre dans le processus d'élaboration duquel on distingue généralement trois étapes ou phases successives : la fusion, l'affinage et l'homogénéisation et le conditionnement thermique du verre.

La présence de bulles dans le verre résulte en effet de l'étape de fusion au cours de laquelle est fondu un mélange vitrifiable, aussi appelé « composition ». Le mélange vitrifiable est constitué de matières premières comportant par exemple un mélange de sable, de calcaire (carbonate de calcium), de carbonate de soude, de dolomie pour la fabrication d'un verre sodocalcique (le verre le plus utilisé pour la fabrication de verre plat), et auxquelles est avantageusement ajouté du calcin (encore appelé groisil) constitué de débris de verre afin notamment de favoriser la fusion.

Le mélange vitrifiable est transformé en une masse liquide dans laquelle se dissolvent même les particules les moins miscibles, c'est-à-dire les plus riches en dioxyde de silicium ou silice (SiO₂) et pauvres en oxyde de sodium (Na₂O).

Le carbonate de sodium (Na₂CO₃) commence à réagir avec les grains de sable à partir de 775°C en dégageant alors des bulles de dioxyde de carbone (CO₂) dans un liquide devenant de plus en plus visqueux à mesure que le carbonate se transforme en silicate. De même, la transformation des grains de calcaire en chaux et la décomposition de la dolomie provoquent également l'émission de dioxyde de carbone (CO₂).

L'étape de fusion est achevée lorsqu'il n'y a plus de particules solides dans le liquide de verre fondu devenu très visqueux mais qui, à ce stade du procédé de fabrication, est alors rempli de bulles d'air et de gaz.

L'étape d'affinage et d'homogénéisation permet alors l'élimination desdites bulles présentes dans le verre fondu. De manière connue, on utilise avantageusement au cours de cette étape des « affinants », c'est-à-dire des substances en faible concentration qui, en se décomposant à la température de fusion du bain, fournissent des gaz qui font gonfler les bulles afin d'en accélérer la montée vers la surface du verre.

L'étape de conditionnement thermique du procédé de fabrication permet ensuite d'abaisser la température du verre dès lors que, au début de l'opération de mise en forme, la viscosité du verre devant généralement être au moins dix fois plus élevée que pendant l'affinage.

Il existe bien évidemment une correspondance entre chacune des étapes de fabrication du verre qui viennent d'être décrite et la structure d'un four destiné à leur mise en œuvre.

Généralement, un tel four pour la fabrication de verre comporte ainsi successivement une zone de fusion dans laquelle a lieu la transformation par fusion du mélange vitrifiable en un bain de verre puis une zone d'affinage et d'homogénéisation pour éliminer les bulles du verre et enfin une zone de conditionnement thermique servant à refroidir le verre de manière à l'amener à la température de formage, bien inférieure aux températures subies par le verre au cours de son élaboration.

On retiendra notamment du processus d'élaboration du verre qui vient d'être rappelé que l'étape de fusion s'accompagne d'émission de dioxyde de carbone (CO₂), soit l'un des principaux gaz à effet de serre impliqué dans le changement climatique.

Hormis la fabrication d'un verre de haute qualité, ainsi que les défis industriels d'une forte productivité avec un coût de construction et d'exploitation des fours les plus faibles possibles, l'un des autres enjeux majeurs auquel l'industrie du verre doit faire face est actuellement écologique, à savoir la nécessité de trouver des solutions pour réduire l'empreinte carbone (en anglais « CO₂ footprint ») liée au processus d'élaboration du verre.

Pour parvenir à atteindre un objectif de neutralité carbone, une approche globale du processus est privilégiée en cherchant à agir sur les multiples leviers pour réduire tant les émissions directes lors de la fabrication que les émissions indirectes ou encore les émissions en amont et en aval de la chaîne de valeur, par exemple celles liées au transport des matériaux en amont puis du produit en aval.

Dès lors, les multiples leviers comprennent la conception des produits et la composition des matériaux, l'amélioration de l'efficacité énergétique des procédés industriels, l'utilisation d'énergies renouvelables et décarbonées, la collaboration avec les fournisseurs de matières premières et les transporteurs afin de réduire leurs émissions, et enfin, l'exploration des technologies de capture et de séquestration des émissions résiduelles.

Dans les émissions directes, outre celles inhérentes au processus d'élaboration du verre rappelées précédemment, le type d'énergie(s) utilisée(s) tout particulièrement pour l'étape de fusion à haute température (plus de 1500°C) représente la part la plus importante dans l'empreinte carbone du processus d'élaboration du verre puisqu'il s'agit généralement d'une énergie fossile, le plus souvent du gaz naturel, voire des produits pétroliers tels que du fioul.

Par conséquent, la recherche de nouvelles conceptions de four doit non seulement permettre de répondre aux enjeux industriels en lien avec la qualité du verre mais aussi de réduire l'empreinte carbone du processus d'élaboration du verre, tant les émissions directes qu'indirectes de dioxyde de carbone (CO₂), et cela en réduisant notamment l'utilisation d'énergie(s) fossile(s).

La fabrication du verre est réalisée dans des fours qui n'ont eu de cesse d'évoluer depuis les premiers fours à pot (ou creuset) en passant par le four Siemens qui est habituellement considéré comme l'ancêtre des grands fours de verrerie à coulée continue d'aujourd'hui, à l'instar des fours à brûleurs transversaux pouvant produire jusqu'à 1200 tonnes de verre flotté par jour.

Le choix de l'énergie utilisée pour la fusion conduit ainsi à distinguer principalement deux grandes conceptions de four pour la fabrication du verre, respectivement les fours à flammes et les fours électriques.

Selon la première conception, les fours à flammes utilisent généralement des combustibles fossiles, notamment du gaz naturel pour les brûleurs, l'énergie thermique est ainsi transmise au verre par échange thermique entre les flammes et la surface du bain de verre.

Les fours à brûleurs transversaux précités sont un exemple de four selon cette première conception et sont largement exploités pour alimenter en verre fondu une unité de flottage ou « float » destinée à fabriquer du verre plat.

Selon la deuxième conception, les fours électriques sont des fours dans lesquels l'énergie thermique est produite par effet Joule dans la masse du verre en fusion.

En effet, substance isolante à température ambiante, le verre devient électriquement conducteur à haute température de sorte que l'on peut envisager d'utiliser l'effet Joule au sein même des fontes de verre pour les chauffer.

Toutefois, les fours électriques sont par exemple utilisés pour l'élaboration de verres particuliers tels que du verre opale au fluor ou du cristal au plomb ou encore sont communément utilisés pour la fabrication de fibres de verre pour de l'isolation thermique.

En effet, il est communément admis par l'Homme du métier que de tels fours électriques ne sont pas en mesure de permettre d'alimenter, ni en quantité, ni surtout en qualité de verre (pour rappel moins de 0,5 bulle par litre), une unité de flottage du verre sur un bain de métal fondu destiné à la fabrication de verre plat.

C'est la raison pour laquelle, les fours à flammes (comme les fours à brûleurs transversaux) demeurent aujourd'hui les seuls fours capables d'alimenter une telle unité de flottage du verre.

Or, les fours à flammes reposent sur l'utilisation d'énergies fossiles essentiellement du gaz naturel pour le combustible de sorte que leur bilan carbone est peu compatible avec les objectifs de réduction des émissions de dioxyde de carbone (CO₂), soit de l'empreinte carbone du processus d'élaboration du verre.

Pour compléter l'exposé des conceptions de four pour la fabrication de verre selon l'état de la technique, on citera une « troisième conception » ou évolution de four, ayant connue récemment des évolutions pour faire face notamment à l'enjeu écologique de réduction des émissions de dioxyde de carbone (CO₂).

Cette troisième conception de four est basée sur un four à flammes mais utilise cependant un chauffage d'appoint électrique, notamment pour augmenter momentanément la production du four ou encore pour améliorer la qualité du verre.

Par conséquent, de tels fours sont encore appelés « fours à flammes avec un appoint électrique ».

Les fours selon cette troisième conception combinent ainsi plusieurs sources d'énergies, respectivement fossile et électrique, et sont pour cette raison aussi appelés fours « hybrides ».

L'adjonction d'un chauffage électrique en appoint permet d'améliorer la capacité de fusion de fours à flammes laquelle est limitée par le transfert thermique se produisant entre la flamme et la surface du bain de verre.

Néanmoins, le fonctionnement d'un tel four hybride repose toujours principalement sur l'utilisation d'un combustible fossile, typiquement du gaz, de sorte que l'impact finalement obtenu sur l'amélioration de l'empreinte carbone du processus d'élaboration du verre reste limité.

En effet, l'électricité n'est utilisée ici qu'en appoint de sorte que son impact est proportionnel. De surcroît, pour améliorer effectivement l'empreinte carbone, l'électricité utilisée doit encore être une électricité dite « verte », c'est-à-dire une électricité qui est produite à partir de sources d'énergies renouvelables et décarbonées.

Le but de l'invention est notamment de proposer une nouvelle conception de four pour la fabrication de verre, ainsi qu'un procédé de fabrication, capable de délivrer un verre de haute qualité pour alimenter tout particulièrement une unité de flottage du verre destinée à fabriquer du verre plat et cela tout en ayant une consommation d'énergie(s) qui permette d'obtenir une réduction significative des émissions de dioxyde de carbone (CO₂) liées au processus d'élaboration du verre.

### Résumé de l'invention

Dans ce but, l'invention propose un four hybride pour la fabrication de verre, en particulier pour alimenter une unité de flottage du verre sur un bain de métal fondu, ledit four hybride comportant d'amont en aval :
- une zone de fusion électrique à voute froide comportant des électrodes pour fondre un mélange vitrifiable afin d'obtenir un bain de verre ;
- une zone d'affinage et d'homogénéisation à voute chaude, comportant une première courroie de convection et une deuxième courroie de convection ; et
- une zone de refroidissement du verre formée par un bassin de conditionnement qui, parcourue par ladite deuxième courroie de convection, comporte au moins un canal d'écoulement,
caractérisé en ce que la zone de fusion électrique et la zone d'affinage et d'homogénéisation du verre sont reliées par un corset et en ce que le four hybride comporte un dispositif de séparation entre la zone de fusion électrique et la zone d'affinage et d'homogénéisation qui est en particulier apte à empêcher un retour du verre fondu de la zone d'affinage et d'homogénéisation vers ladite zone de fusion, ledit dispositif de séparation étant positionné au niveau dudit corset, de préférence au niveau de l'extrémité amont du corset et comportant un barrage qui est en partie immergé dans le bain de verre.

Avantageusement, le four hybride est destiné à alimenter en verre de haute qualité une zone de formage constituée par une unité de flottage du verre sur un bain de métal fondu.

Le four selon l'invention est dit « hybride » par analogie avec la troisième conception de four décrite précédemment, le terme « hybride » est ainsi employé pour le qualifier en raison de l'utilisation de deux sources d'énergie différentes, respectivement de l'énergie électrique et de l'énergie combustible.

Cependant, l'analogie avec la présente invention ne va pas au-delà dès lors que l'énergie électrique est lors de la fabrication du verre l'unique source d'énergie utilisée pour obtenir la fusion du verre et que l'énergie combustible, de type fossile ou équivalente, n'est par conséquent utilisée dans le four que pour l'affinage et l'homogénéisation du verre.

Avantageusement, le four hybride selon l'invention associe d'une part une zone de fusion électrique à voûte froide et, d'autre part, une zone d'affinage d'homogénéisation du verre à flammes, c'est-à-dire par combustion.

Grâce à une telle combinaison, le four hybride selon l'invention permet d'obtenir un verre de haute qualité, c'est-à-dire comportant moins de 0,1 bulle par litre, de sorte que ce verre est avantageusement susceptible d'alimenter une unité de flottage du verre ou « float » destinée à la fabrication de verre plat.

La présente invention va donc à l'encontre des préjugés de l'Homme du métier pour lequel un four de fusion électrique ne peut en outre permettre d'obtenir un tel verre de haute qualité.

Dans la présente invention, un verre de haute qualité est ainsi obtenu grâce à l'étape d'affinage et d'homogénéisation qui est mise en œuvre après l'étape de fusion électrique.

Avantageusement, il n'y a pas de retour du verre fondu de la zone d'affinage et d'homogénéisation vers la zone de fusion dans un four hybride selon l'invention.

Dans un four hybride selon l'invention, aucune courroie de convection ou boucle de recirculation du verre ne s'étend depuis la zone d'affinage et d'homogénéisation vers la zone de fusion.

Dans l'invention, l'étape d'affinage et d'homogénéisation du verre s'effectue sur du verre ne renfermant avantageusement que pas ou peu d'infondus grâce notamment au dispositif de séparation permettant d'accroître le temps de séjour du verre dans la zone de fusion laquelle est de surcroît configurée pour comporter une zone tampon de faible convection.

Avantageusement, le four hybride selon l'invention mise sur l'énergie électrique pour la fusion du mélange vitrifiable et fait le pari de la disponibilité croissante d'une électricité « verte » par exemple obtenue à partir d'énergies éolienne, solaire, etc. et non à partir d'énergies fossiles comme le charbon ou le pétrole.

Avantageusement, l'énergie combustible utilisée dans les brûleurs de la zone d'affinage et d'homogénéisation n'est pas une énergie fossile comme le gaz naturel mais une autre énergie combustible équivalente, préférentiellement de l'hydrogène, en variante du bio-méthane.

Le four hybride selon l'invention est en conséquence à même de répondre non seulement à l'enjeu de la haute qualité de verre requise pour alimenter une unité de flottage ou « float » mais également à l'enjeu écologique afin de permettre une réduction de l'empreinte carbone du processus d'élaboration.

Selon d'autres caractéristiques du four selon l'invention :
-- le four hybride comporte une zone d'enfournement dans laquelle est agencé un dispositif d'enfournement pour introduire ledit mélange vitrifiable dans la zone de fusion électrique ;
-- le dispositif d'enfournement est configuré pour déposer le mélange vitrifiable sur l'ensemble de la surface du bain de verre de manière à former une couche isolante entre le bain de verre et la voûte de la zone de fusion ;
   - les électrodes sont agencées en surface de manière à plonger dans le mélange vitrifiable, lesdites électrodes plongeantes s'étendant de préférence verticalement ;
   - les électrodes sont agencées à travers une sole de la zone de fusion de manière à être immergées dans le mélange vitrifiable, lesdites électrodes montantes s'étendant de préférence verticalement ;
-- le four hybride comporte des électrodes plongeantes et/ou des électrodes montantes ;
   - la zone de fusion électrique comporte une zone de faible convection, dite zone tampon, située entre l'extrémité libre des électrodes plongeantes et une sole de la zone de fusion ;
   - la zone de fusion est configurée pour présenter une profondeur déterminée de manière à obtenir ladite zone tampon de faible convection, de préférence la profondeur est supérieure à 600 mm, voire préférentiellement supérieure à 800 mm ;
   - le barrage est monté mobile verticalement pour permettre d'en régler la profondeur d'immersion dans le bain de verre de sorte que la section du passage du verre fondu est susceptible de varier en fonction du réglage de la profondeur du barrage ;
   - le barrage est amovible, c'est-à-dire démontable, afin notamment d'en permettre le changement en cas d'usure et de faciliter la maintenance du four ;
   - le dispositif de séparation comporte un moyen de séparation pour séparer l'atmosphère de la zone de fusion électrique à voûte froide et l'atmosphère de la zone d'affinage et d'homogénéisation à voûte chaude ;
   - la première courroie de convection et la deuxième courroie de convection sont séparées par une zone d'inversion des courroies déterminée par un point chaud ou source correspondant au point le plus chaud du verre ;
   - la zone d'affinage et d'homogénéisation comporte au moins un brûleur qui est agencé pour obtenir ledit point chaud déterminant ladite zone d'inversion des courroies ;
   - le four hybride comporte un muret qui est agencé dans ladite zone d'inversion des courroies ;
   - le four hybride comporte une variation de la profondeur de la sole par rapport à une surface du verre dans la zone d'affinage et d'homogénéisation, de préférence au moins une élévation, voire une dénivellation, ladite variation de profondeur étant située dans la partie comprenant la première courroie de convection et/ou dans la partie comprenant la deuxième courroie de convection ;
   - le four hybride comporte des moyens de modulation tels que du « boosting » électrique et/ou des bouillonneurs qui, agencés dans la zone d'affinage et d'homogénéisation, sont aptes à permettre de moduler la convection desdites courroies afin de faciliter la conduite de la fabrication du verre ;
   - le bassin de conditionnement de la zone de refroidissement comprend, d'amont en aval, un corset puis une braise ;
-- dans tout plan vertical transversal à l'axe longitudinal du bassin de conditionnement, il existe des points dans le verre ayant une composante de vitesse longitudinale allant de l'aval vers l'amont ;
-- après le bassin de conditionnement, aucun courant de retour n'a lieu dans le canal d'écoulement destiné à alimenter en verre de haute qualité une zone de formage, dit autrement l'écoulement du verre dans le canal est un écoulement de type « piston » ;
   - le four hybride est apte à délivrer un verre de haute qualité présentant moins de 0,1 bulle par litre, préférentiellement moins 0,05 bulle par litre ;
-- ledit four hybride de fabrication de verre alimente une unité de flottage du verre sur un bain de métal fondu.

Dans ce but, l'invention propose aussi un procédé de fabrication de verre dans un four hybride du type décrit précédemment, ledit procédé de fabrication comportant successivement les étapes consistant à :
(a) - fondre un mélange vitrifiable dans une zone de fusion électrique à voûte froide pour obtenir du verre fondu ;
(b) - affiner et homogénéiser ledit verre fondu dans une zone d'affinage et d'homogénéisation à voute chaude comportant une première courroie de convection et une deuxième courroie de convection ;
(c) - refroidir le verre dans une zone de refroidissement qui, formée par un bassin de conditionnement, est parcourue par la deuxième courroie de convection,
caractérisé en ce que le procédé comporte une étape (d) de réglage consistant à régler la profondeur d'un barrage mobile qui, immergé dans le verre, est agencé dans un corset reliant la zone de fusion électrique à la zone d'affinage et d'homogénéisation, pour contrôler le débit de verre fondu prélevé dans la zone de fusion.

De préférence, après l'étape (c) de refroidissement dans le bassin de conditionnement, le verre s'écoule dans un canal d'écoulement pour alimenter en verre de haute qualité une unité de flottage du verre.

### Brève description des figures

D'autres caractéristiques et avantages de l'invention apparaitront au cours de la lecture de la description détaillée qui va suivre pour la compréhension de laquelle on se reportera aux dessins annexés dans lesquels :

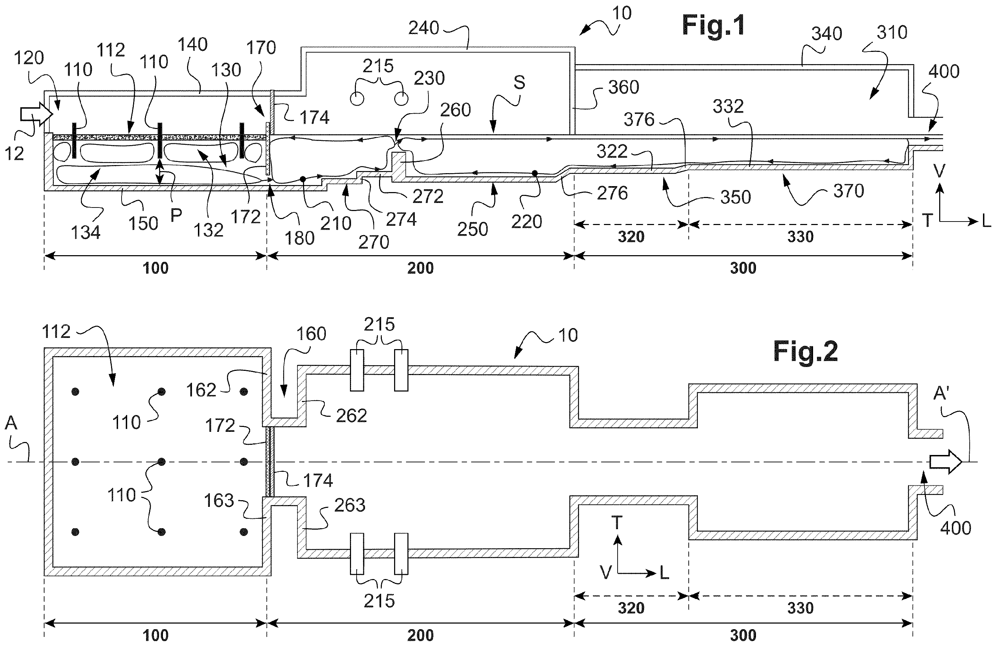

- la figure 1 est une vue de côté qui représente un four pour la fabrication de verre selon un mode de réalisation de l'invention et qui illustre une zone de fusion électrique à voûte froide associée à une zone d'affinage et d'homogénéisation à voûte chaude comportant une première courroie de convection et une deuxième courroie de convection et enfin une zone de refroidissement parcourue par ladite deuxième courroie de convection ;
- la figure 2 est une vue de dessus qui représente le four selon la figure 1 et qui illustre la zone de fusion électrique reliée à la zone d'affinage et d'homogénéisation par un corset dans lequel est agencé un barrage monté mobile verticalement et la zone de refroidissement formée par un bassin de conditionnement comportant un corset et une braise.

### Description détaillée de l'invention

Dans la suite de la description, on adoptera à titre non limitatif les orientations longitudinale, verticale et transversale en référence au trièdre (L, V, T) représenté sur les figures 1 et 2.

On utilisera également par convention les termes « amont » et « aval » en référence à l'orientation longitudinale, ainsi que « supérieur » et « inférieur » ou « haut » et « bas » en référence à l'orientation verticale, et enfin « gauche » et « droite » en référence à l'orientation transversale.

Dans la présente description, les termes « amont » et « aval » correspondent au sens d'écoulement du verre dans le four, le verre s'écoulant de l'amont vers l'aval suivant un axe longitudinal médian A-A' du four hybride (amont en A, aval en A') représenté sur la figure 2.

Par ailleurs, les termes « courroie » et « boucle » sont ici synonymes, ces termes en lien avec la recirculation du verre dans le four étant bien connus de l'Homme du métier, tout comme le sont respectivement les notions de « voûte froide » et de « voûte chaude » pour un four destiné à la fabrication du verre.

On a représenté sur les figures 1 et 2, respectivement en vues de côté et de dessus (qui ne sont pas à l'échelle), un four hybride 10 pour la fabrication de verre illustrant un mode de réalisation de la présente invention.

Tel qu'indiqué précédemment, par analogie avec la troisième conception de four décrite précédemment, le terme « hybride » est ici employé pour qualifier le four selon l'invention en raison de l'utilisation de deux sources d'énergie différentes, respectivement de l'énergie électrique et de l'énergie combustible.

Toutefois, l'analogie avec la présente invention ne va pas au-delà dès lors, d'une part, que l'énergie électrique (constituant la première source) est l'unique source d'énergie utilisée pour obtenir la fusion du verre et, d'autre part, que l'énergie combustible (constituant la deuxième source), de type fossile ou équivalente, n'est utilisée que pour l'affinage et l'homogénéisation du verre.

Le four hybride 10 selon l'invention est en particulier destiné à alimenter une unité de flottage du verre sur un bain de métal fondu, généralement de l'étain, pour la fabrication de verre plat.

Tel qu'illustré par les figures 1 et 2, le four hybride 10 comporte successivement d'amont en aval, suivant ledit axe longitudinal médian A-A' du four, au moins une zone 100 de fusion électrique, une zone 200 d'affinage et d'homogénéisation et une zone 300 de refroidissement du verre.

Selon une première caractéristique de l'invention, la zone 100 de fusion du four hybride 10 est électrique.

Avantageusement, la zone 100 de fusion électrique est du type à « voute froide ».

Avantageusement, l'étape de fusion du verre est obtenue en utilisant uniquement de l'énergie électrique lors de la fabrication du verre et cela par comparaison avec les fours hybrides de l'état de la technique dans lesquels l'étape de fusion est obtenue au moyen d'énergie combustible et, en appoint, d'énergie électrique.

La zone 100 de fusion électrique comporte des électrodes 110 pour fondre un mélange vitrifiable (ou « composition ») qui est constitué des matières premières et du calcin (ou « groisil ») afin d'obtenir un bain 130 de verre.

De manière connue, le calcin (en anglais « cullet ») est constitué de débris de verre qui, obtenus par recyclage du verre, sont broyés et nettoyés avant d'être ensuite ajoutés aux matières premières pour fabriquer à nouveau du verre.

Avantageusement, le calcin favorise la fusion, c'est-à-dire la transformation par fusion du mélange vitrifiable en verre.

De surcroît, le calcin permet de valoriser le verre usagé en le recyclant (le verre étant recyclable à l'infini), les quantités de matières premières nécessaires à la fabrication du verre s'en trouvant dès lors réduites à proportion, ce qui participe à la réduction de l'empreinte carbone du processus d'élaboration.

Le four hybride 10 comporte une zone 120 d'enfournement dans laquelle est agencé un dispositif 12 d'enfournement (encore appelé enfourneuse) qui est destiné à introduire le mélange vitrifiable dans la zone 100 de fusion électrique, ledit dispositif 12 d'enfournement étant illustré schématiquement par une flèche sur la figure 1.

Avantageusement, le dispositif 12 d'enfournement est configuré pour déposer le mélange vitrifiable sur l'ensemble de la surface du bain 130 de verre de manière à former une couche 112 isolante entre le bain 130 de verre et une voûte 140 de la zone 100 de fusion électrique, raison pour laquelle cette dernière est appelée « voûte froide ».

De préférence, le bain 130 de verre est uniformément recouvert d'une couche 112 constituée de mélange vitrifiable, par exemple de 10 à 40 cm d'épaisseur, en dessous de laquelle ont lieu les réactions chimiques complexes qui, décrites en préambule de la demande, conduisent à l'obtention du verre fondu.

Dans la zone 100 de fusion électrique à voûte froide, la puissance dissipée autour des électrodes 110 engendre une zone 132 de fortes convections comportant en particulier des courants ascendants très intenses qui apportent les calories nécessaires à la frontière entre la fonte et le mélange vitrifiable formant ladite couche 112 de mélange vitrifiable.

Dans le processus d'élaboration du verre selon l'état de la technique, outre le dioxyde de carbone (CO₂), la décomposition des matières premières et l'utilisation d'une énergie fossile comme combustible pour l'étape de fusion sont aussi à l'origine d'émissions polluantes constituées essentiellement d'oxyde d'azote (NOx), d'oxyde de soufre (SOx), d'halogènes et de poussières.

Avantageusement, l'absence de combustion (flammes) dans la zone 100 de fusion électrique à voûte froide du four hybride 10 selon l'invention a pour conséquence que le taux de pollution en NOx et SOx est comparativement très faible.

De plus, bien que perméable au dioxyde de carbone (CO₂), la couche 112 de mélange vitrifiable présente sur la surface du bain 130 permet avantageusement de piéger par condensation ou par réactions chimiques les vapeurs, parfois toxiques selon la composition, émises par le verre fondu.

Avantageusement, les électrodes 110 sont agencées en surface de manière à plonger dans le bain 130 de verre, à travers la couche 112 recouvrant la surface du bain 130 tel qu'illustré par la figure 1.

De préférence, les électrodes 110 plongeantes s'étendent verticalement. En variante, les électrodes 110 plongeantes s'étendent obliquement, c'est-à-dire sont inclinées de manière à présenter un angle donné par rapport à l'orientation verticale.

En variante, les électrodes 110 sont agencées à travers une sole 150 de la zone 100 de fusion électrique de manière à être immergées dans le bain 130, les électrodes montantes (par opposition aux électrodes plongeantes) s'étendant de préférence verticalement, en variante obliquement.

Par comparaison à des électrodes agencées à travers la sole 150, les électrodes 110 plongeantes permettent en outre un contrôle plus aisé de leur état d'usure et entraîne une dissipation de l'énergie électrique qui est avantageusement plus proche de l'interface de fusion, de la couche 112 de mélange vitrifiable.

Avantageusement, les électrodes 110 plongeantes permettent par comparaison avec des électrodes montantes de conserver une sole 150 de la zone 100 de fusion électrique qui est exempte de toutes ouvertures.

De préférence, la sole 150 de la zone 100 de fusion électrique est plane telle qu'illustrée par la figure 1.

En variante, la sole 150 comporte au moins une variation de profondeur relativement à la surface du bain 130 de verre, ladite variation comportant au moins une élévation et/ou au moins une dénivellation.

De préférence, les électrodes 110 de fusion sont réparties de manière régulière dans le bain 130. Par ailleurs, le nombre de neuf électrodes 110 représentées ici sur les figures 1 et 2 n'est qu'un exemple illustratif et n'est donc nullement limitatif.

En variante, la zone 100 de fusion électrique pourrait comporter cumulativement des électrodes plongeantes et des électrodes montantes.

Selon une autre variante d'agencement, les électrodes 110 traversent au moins une paroi latérale délimitant ladite zone 100 de fusion électrique, lesdites électrodes 110 s'étendant alors horizontalement et/ou obliquement.

Avantageusement, les électrodes 110 sont en molybdène, ce métal réfractaire supportant des températures de 1700°C étant particulièrement apte à permettre de réaliser une telle fusion du verre en utilisant l'effet Joule, le verre ne devenant conducteur qu'à haute température.

Avantageusement, la zone 100 de fusion électrique comporte une zone de faible convection, dite zone tampon 134, qui est située entre l'extrémité libre des électrodes 110 plongeantes et la sole 150.

La zone 100 de fusion électrique est ainsi configurée pour présenter, en dessous des électrodes 110 plongeantes, une profondeur (P) déterminée de manière à obtenir une telle zone tampon 134 de faible convection.

De préférence, la profondeur (P) entre l'extrémité libre des électrodes 110 plongeantes et la sole 150 est supérieure à 600 mm, préférentiellement supérieure à 800 mm.

Une telle zone tampon 134 de faible convection constitue une autre raison de préférer les électrodes 110 plongeantes par rapport à des électrodes montantes traversant la sole 150.

Avantageusement, la présence d'une zone tampon 134 de faible convection participe directement à l'obtention d'un verre de haute qualité en favorisant un temps de séjour du verre plus long dans la zone 100 de fusion.

La zone 100 de fusion électrique et la zone 200 d'affinage et d'homogénéisation du verre sont reliées l'une à l'autre par un corset 160, c'est à dire une zone de largeur réduite, tel qu'illustré par la figure 2.

Le passage de la zone 100 de fusion électrique au corset 160 se fait par un rétrécissement brusque de la largeur et de la section de passage du verre, par exemple ici par des parois 162 et 163 formant un angle de 90° avec l'axe longitudinal médian A-A' du four.

Le passage du corset 160 à la zone 200 d'affinage et d'homogénéisation du verre se fait par un élargissement brusque de la section de passage du verre, par exemple ici par des parois 262 et 263 formant un angle de 90° avec l'axe longitudinal médian A-A' du four.

En variante, l'angle en entrée du corset 160 pourrait présenter une valeur qui soit supérieure à 90° de sorte que le rétrécissement de la largeur soit moins brusque, plus progressif, de manière analogue la valeur de l'angle en sortie du corset 160 pourrait être choisie pour que l'élargissement soit également moins brusque, plus progressif suivant l'axe longitudinal médian A-A' du four.

Avantageusement, le verre fondu s'écoulant de l'amont vers l'aval par le corset 160 est prélevé dans la partie inférieure de la zone 100 de fusion électrique, soit dans le fond, le verre y étant plus « froid » par comparaison que dans la zone 132 de fortes convections située entre les électrodes 110.

Le four hybride 10 comporte un corset 160 plutôt qu'une gorge qui est notamment plus sensible à l'usure provoquée par l'écoulement continu du verre fondu.

Selon une deuxième caractéristique de l'invention et par opposition à la zone 100 de fusion électrique à voûte froide, la zone 200 d'affinage et d'homogénéisation du four hybride 10 est du type à « voute chaude ».

La zone 200 d'affinage et d'homogénéisation du four hybride 10 est configurée pour éliminer les bulles (ou défauts gazeux) présentes dans le verre fondu provenant de la zone 100 de fusion électrique afin d'obtenir un verre qui soit de haute qualité et ce faisant notamment apte à alimenter une unité de flottage du verre.

Pour ce faire, la zone 200 d'affinage et d'homogénéisation comporte une première courroie 210 de convection, dite boucle de recirculation amont, et une deuxième courroie 220 de convection, dite boucle de recirculation aval.

De préférence, la première courroie 210 de convection, dite boucle de recirculation amont, est longitudinalement plus courte que la deuxième courroie 220 de convection comme illustré par la figure 1.

Avantageusement, les courants de convection dans le verre correspondant auxdites courroies 210, 220 opèrent un brassage favorisant l'élimination des bulles et augmentant le temps de séjour du verre dans la zone 200 d'affinage et d'homogénéisation ce qui participe à l'obtention d'un verre de haute qualité.

La première courroie 210 de convection et la deuxième courroie 220 de convection sont séparées par une zone 230 d'inversion des courroies 210, 220 qui est déterminée par un point chaud (appelé aussi « point source ») qui correspond au point le plus chaud du verre, généralement à une température supérieure à 1500°C.

La zone 200 d'affinage et d'homogénéisation comporte au moins un brûleur 215, préférentiellement ici deux brûleurs 215 aériens qui sont agencés sous une voûte 240 pour obtenir ledit point chaud déterminant la zone 230 d'inversion desdites courroies 210, 220.

Dans la zone 200 d'affinage et d'homogénéisation, une partie de l'énergie thermique dégagée par la combustion est transmise directement au verre par rayonnement et convection, une autre partie est transmise par la voûte 240 qui la restitue au verre par rayonnement, et qui notamment pour cette raison est appelée « voûte chaude ».

De préférence, les brûleurs 215 de la zone 200 d'affinage et d'homogénéisation sont des brûleurs transversaux représentés schématiquement sur la figure 2.

Ainsi, le chauffage du verre dans la zone 200 d'affinage et d'homogénéisation est obtenu par les flammes des brûleurs 215 qui se développent par combustion au-dessus de la surface S du verre.

Dans un four hybride 10 selon l'invention, après sa mise en service en vue de la fabrication, l'étape de fusion du verre réalisée dans la zone 100 de fusion est obtenue uniquement avec de l'énergie électrique.

Avantageusement, le chauffage du verre en surface réalisé par combustion d'une énergie fossile ou combustible équivalent dans ladite zone 200 est donc destiné à la seule mise en œuvre de l'étape d'affinage et d'homogénéisation du verre prélevé dans ladite zone 100 de fusion.

Par comparaison notamment avec un four hybride selon la troisième conception décrite précédemment, l'énergie fossile ou combustible équivalente utilisée par les brûleurs 215 pour la combustion ne participe pas à l'étape de fusion de sorte que cette énergie combustible est dans l'invention utilisée en « appoint » par rapport à l'énergie électrique servant en outre à la fusion.

Par conséquent, un four hybride 10 selon l'invention permet de réduire significativement la part de l'énergie combustible par rapport à l'énergie électrique dans le processus d'élaboration du verre, l'énergie électrique devenant l'énergie principale et l'énergie combustible secondaire ou auxiliaire.

Dès lors, on comprendra que la conception du four hybride 10 selon l'invention est particulièrement avantageuse pour réduire l'empreinte carbone lorsque, d'une part, l'énergie combustible est une énergie fossile tel que du gaz et, d'autre part, l'énergie électrique est en tout ou en partie une électricité « verte » obtenue à partir d'énergies renouvelables et décarbonées.

La zone 200 d'affinage et d'homogénéisation peut comporter plus de deux brûleurs 215, en particulier des brûleurs en amont et/ou en aval de ladite zone 230 d'inversion qui, également positionnés au-dessus de la surface S du verre, sont aptes à chauffer ladite surface S du verre afin de parfaire l'affinage et l'homogénéisation du verre par élimination des bulles (ou défauts gazeux) présentes dans le verre fondu.

En effet, en réglant la puissance des brûleurs 215, on peut ajuster la distribution longitudinale des températures et donc la position du point chaud qui est un paramètre important de la conduite du four.

Les brûleurs 215 produisent une flamme par combustion qui peut être obtenue de manière connue en associant différents types de combustible et de comburant mais dont le choix a en outre des conséquences directes dans le bilan carbone de la fabrication du verre, soit les émissions directes et indirectes de gaz à effet de serre qui sont liées à la fabrication du produit, notamment les émissions de dioxyde de carbone (CO₂).

Pour la combustion par les brûleurs 215 de la zone 200 d'affinage et d'homogénéisation, on utilise généralement l'oxygène présent dans l'air comme comburant, lequel air peut être enrichi en oxygène afin d'obtenir un air suroxygéné, voire on utilise quasiment de l'oxygène pur dans le cas particulier d'une oxycombustion.

Généralement, le combustible utilisé est du gaz naturel. Toutefois, pour améliorer notamment encore le bilan carbone, on utilisera avantageusement un biocombustible (en anglais « green-fuels ») en particulier un « biogaz », c'est à dire un gaz composé essentiellement de méthane et de dioxyde de carbone qui est produit par méthanisation soit la fermentation de matières organiques en l'absence d'oxygène, voire préférentiellement du « bio-méthane » (CH₄).

On utilisera encore plus préférentiellement comme combustible de l'hydrogène (H₂) qui, par comparaison à un biogaz, ne comporte avantageusement pas de carbone.

Avantageusement, le four hybride 10 de fabrication de verre selon l'invention peut comporter des régénérateurs en matériaux réfractaires fonctionnant (par exemple par paires et en inversion) ou encore des échangeurs métalliques air/fumée (aussi appelés récupérateurs) qui utilisent respectivement la chaleur contenue dans les fumées issues de la fabrication pour réaliser un préchauffage des gaz et ainsi améliorer la combustion.

Dans le mode de réalisation illustré par les figures 1 et 2, le four hybride 10 comporte un dispositif 170 de séparation entre la zone 100 de fusion électrique et la zone 200 d'affinage et d'homogénéisation.

Le dispositif 170 de séparation est apte à empêcher un retour du verre fondu de la zone 200 d'affinage et d'homogénéisation vers la zone 100 de fusion électrique, c'est à dire un retour depuis la première courroie 210 de convection du verre.

Avantageusement, le dispositif 170 de séparation permet d'accroître le temps de séjour du verre dans la zone 100 de fusion électrique ce qui participe à l'obtention d'un verre de haute qualité.

Le dispositif 170 de séparation est positionné au niveau du corset 160, de préférence au niveau de l'extrémité amont dudit corset.

Tel qu'illustré sur les figures 1 et 2, le dispositif 170 de séparation comporte au moins un barrage 172 qui est en partie immergé dans le verre fondu.

Avantageusement, le dispositif 170 de séparation assure une délimitation de la couche 112 de mélange vitrifiable recouvrant le bain 130 de verre dans la zone 100 de fusion électrique à voûte froide par rapport à la zone 200 d'affinage et d'homogénéisation à voûte chaude.

De préférence, la délimitation de la couche 112 de mélange vitrifiable est assurée par le barrage 172 qui s'étend pour ce faire au-dessus de la surface du bain 130 de verre tel qu'illustré par la figure 1.

De préférence, le barrage 172 est amovible, c'est à dire démontable, de sorte que ledit barrage 172 est susceptible d'être changé, voire réparé, notamment en raison de l'usure survenant au contact du verre, et ce grâce à quoi la maintenance du four hybride 10 s'en trouve facilitée.

Le barrage 172 est par exemple réalisé en métal ou alliage de métaux non réfractaire, ledit barrage 172 étant alors apte à être refroidi par un circuit de refroidissement (non représenté) à fluide caloporteur, notamment un circuit du type « water jacket » selon les termes anglais usités.

En variante, le barrage 172 est réalisé en matériau réfractaire, typiquement en céramique, par exemple un réfractaire électrofondu « AZS » (acronyme pour Alumine-Zircon-Silice) ou encore un métal réfractaire comme le molybdène.

Avantageusement, le barrage 172 est monté mobile verticalement pour permettre d'en régler la profondeur d'immersion dans le bain 130 de verre de sorte que la section du passage du verre fondu, dite zone 180 de prélèvement (ou de soutirage), située au-dessus de la sole 150, est susceptible de varier en fonction du réglage de la profondeur du barrage 172.

Le dispositif 170 de séparation comporte encore un moyen 174 de séparation pour séparer l'atmosphère de la zone 100 de fusion et l'atmosphère de la zone 200 d'affinage et d'homogénéisation comportant notamment des fumées.

De préférence, le moyen 174 de séparation est un rideau constituant un élément rapporté sur la superstructure du four hybride 10.

On appelle conventionnellement l'ensemble des blocs en contact avec le verre « infrastructure » et « superstructure » l'ensemble des matériaux disposés au-dessus de l'infrastructure.

Le matériau de superstructure, venant au-dessus des blocs de cuve de l'infrastructure et n'étant pas en contact avec le verre mais avec l'atmosphère à l'intérieur du four, est généralement de nature différente de celle des blocs de cuve de l'infrastructure.

Même si le matériau utilisé pour la superstructure est identique à celui de l'infrastructure, par exemple dans le cas d'une voûte chaude, on distingue généralement ces deux parties de la structure d'un four.

En variante, le moyen 174 de séparation est constitué par une partie de la superstructure, par exemple une cloison double en forme de « U » s'ouvrant vers l'extérieur.

Avantageusement, le barrage 172 est alors monté entre les deux ailes du « U » de la cloison, soit dans la portion basse en creux les reliant.

De préférence, le barrage 172 et le rideau 174 atmosphérique formant le dispositif 170 de séparation sont des éléments structurellement distincts, indépendants.

De préférence, le rideau 174 n'est pas en contact avec la surface du verre mais en contact avec le barrage 172 pour établir ladite séparation, le rideau 174 étant par exemple situé derrière comme illustré sur la figure 1, soit en aval du barrage.

En variante, le rideau 174 est situé devant, soit en amont du barrage 172 ou encore situé dans le même plan vertical.

En variante, le barrage 172 et le rideau 174 sont réalisés en une seule pièce assurant alors une double fonction, d'une part la première fonction de séparation du verre entre la zone 100 de fusion et la zone 200 d'affinage et d'homogénéisation et, d'autre part, une fonction de séparation entre l'atmosphère de la zone 100 de fusion à voûte froide 140 et l'atmosphère de la zone 200 d'affinage et d'homogénéisation à voûte chaude 240.

Dans le mode de réalisation illustré par les figures 1 et 2, le four hybride 10 comporte avantageusement un muret 260 qui est agencé dans ladite zone 230 d'inversion des courroies.

De préférence, le muret 260 s'étend verticalement depuis la sole 250 de la zone 200 d'affinage et d'homogénéisation.

Tel qu'illustré par la figure 1, le muret 260 comporte une partie sommitale qui, immergée en dessous de la surface S du verre, détermine le passage du verre de la première courroie 210 de convection, dite boucle de recirculation amont, vers la deuxième courroie 220 de convection, dite boucle de recirculation aval.

De préférence, le four hybride 10 comporte des moyens de modulation (non représentés) tels que du « boosting » électrique et/ou des bouillonneurs qui, agencés dans la zone 200 d'affinage et d'homogénéisation, sont aptes à permettre de moduler la convection desdites courroies 210, 220 afin de faciliter la conduite de la fabrication du verre.

Avantageusement, les moyens de modulation comportent donc selon le terme anglais du « boosting » électrique, c'est-à-dire des moyens de chauffage électrique d'appoint comportant des électrodes et/ou des bouillonneurs, c'est à dire un système d'injection d'au moins un gaz, tel que de l'air ou de l'azote, au niveau de la sole dont les bulles créent alors un mouvement ascensionnel du verre.

De préférence, le four hybride 10 comporte au moins une variation 270 de la profondeur, par rapport à la surface S du verre, d'une sole 250 située dans la zone 200 d'affinage et d'homogénéisation.

La variation 270 de profondeur est située dans la partie comprenant la première courroie 210 de convection et/ou dans la partie comprenant la deuxième courroie 220 de convection.

Avantageusement, la variation 270 de la profondeur de la sole 250 est par exemple constituée par au moins une élévation, voire ici plusieurs élévations qui sont illustrées par la figure 1.

En variante, la variation 270 de la profondeur de la sole 250 est constituée par au moins une dénivellation.

L'élévation formant la variation 270 de profondeur de la sole 250, soit ici une réduction de la profondeur, est par exemple constituée par au moins une marche 272, voire deux marches.

La variation 270 de profondeur peut s'effectuer plus ou moins progressivement, par exemple par une portion droite 274 dans le cas des deux marches 272 situées en amont du muret 260 ou en variante par une portion inclinée 276 telle qu'illustrée par exemple dans le cas de la marche 322 située en aval du muret 260, à la jonction de la zone 200 d'affinage et d'homogénéisation et de la zone 300 de refroidissement du verre.

De préférence, la zone 300 de refroidissement comporte donc également une variation 370 de profondeur qui est formée par une élévation.

Tel qu'illustré par la figure 1, la variation 370 de profondeur dans la zone 300 de refroidissement comporte par exemple la marche 322, située dans le corset 320, à laquelle conduit depuis la sole 250 la jonction inclinée 276 et une autre marche 332 qui est située dans la braise 330, en aval de la marche 322.

La marche 322 se raccorde également de manière progressive à l'autre marche 332 par une portion 376 inclinée qui est située à la jonction entre le corset 320 et la braise 330.

En variante, les portions respectivement droite et inclinée qui viennent d'être décrites en référence à la figure 1 pourraient être inversées entre les marches 272 d'une part et les marches 322, 332 d'autre part, ou encore n'être que d'un seul et même type, c'est-à-dire soit droites, soit inclinées.

Tel qu'illustré par la figure 1 et ainsi qu'il vient d'être décrit avec les marches 322 et 332 successives, la zone 300 de refroidissement comporte une sole 350 qui est configurée de manière que la profondeur par rapport à la surface S de verre diminue progressivement de l'amont vers l'aval, depuis le muret 260.

Selon une troisième caractéristique de l'invention, le four hybride 10 comporte, en aval de la zone 200 d'affinage et d'homogénéisation, ladite zone 300 de refroidissement du verre qui est parcourue par la deuxième courroie 220 de convection, dite boucle de recirculation aval.

La zone 300 de refroidissement est formée par un bassin 310 de conditionnement qui communique avec au moins un canal 400 d'écoulement destiné à alimenter en verre de haute qualité une zone de formage (non représentée) située en aval.

Avantageusement, le bassin 310 de conditionnement de la zone 300 de refroidissement comprend, d'amont en aval, un corset 320 puis une braise 330.

Avantageusement, l'atmosphère de la zone 200 d'affinage et d'homogénéisation et l'atmosphère plus froide de la zone 300 de refroidissement sont séparées l'une de l'autre par un écran thermique 360 tel qu'une cloison s'étend verticalement depuis une voûte 340 jusqu'au voisinage de la surface S du verre, préférentiellement sans tremper dans le verre.

Avantageusement, dans tout plan vertical transversal à l'axe longitudinal médian A-A' du four, il existe dans le bassin 310 de conditionnement des points dans le verre ayant une composante de vitesse longitudinale allant de l'aval vers l'amont.

Après le bassin 310 de conditionnement, aucun courant de retour n'a lieu dans le canal 400 d'écoulement destiné à alimenter en verre la zone de formage, dit autrement l'écoulement du verre dans le canal 400 est un écoulement de type « piston ».

Avantageusement, le four hybride 10 selon l'invention est apte à délivrer un verre de haute qualité présentant moins de 0,1 bulle par litre, préférentiellement moins 0,05 bulle par litre, un tel verre de haute qualité convenant tout particulièrement pour alimenter une unité de flottage du verre sur un bain de métal fondu.

Le four hybride 10 de fabrication de verre selon l'invention alimente préférentiellement une unité de flottage du verre sur un bain de métal fondu, par exemple de l'étain, destinée à la fabrication de verre plat.

L'invention concerne encore un procédé de fabrication de verre dans un four hybride 10 du type de celui qui vient d'être décrit en référence aux figures 1 et 2.

Ainsi, le procédé de fabrication selon l'invention comporte successivement les étapes consistant à :
(a) - fondre un mélange vitrifiable dans une zone de fusion électrique à voûte froide pour obtenir du verre fondu ;
(b) - affiner et homogénéiser ledit verre fondu dans une zone d'affinage et d'homogénéisation à voute chaude comportant une première courroie de convection (dite boucle de recirculation amont) et une deuxième courroie de convection (dite boucle de recirculation aval) ;
(c) - refroidir le verre dans une zone de refroidissement qui, formée par un bassin de conditionnement, est parcourue par la deuxième courroie de convection.

Le procédé comporte une étape (d) de réglage consistant à régler la profondeur du barrage 172 mobile qui, immergé dans le verre, est agencé dans un corset 160 reliant la zone 100 de fusion électrique à la zone 200 d'affinage et d'homogénéisation, pour contrôler le débit de verre fondu prélevé dans la zone 100 de fusion.

Avantageusement, l'étape (d) de réglage permet de faire varier la quantité de verre fondu passant de la zone 100 de fusion électrique à la zone 200 d'affinage et d'homogénéisation, par exemple en fonction de la tirée.

Le barrage 172 permet en outre de prélever le verre fondu dans la partie inférieure de la zone 100 de fusion électrique à voûte froide, au voisinage de la sole 150.

Avantageusement, le verre est ainsi soutiré de la zone tampon 134 de faible convection lorsque ladite zone 100 de fusion comporte des électrodes 110 plongeantes.

Après l'étape (c) de refroidissement dans le bassin 310 de conditionnement, le verre s'écoule dans un canal 400 d'écoulement destiné à alimenter en verre de haute qualité une unité de flottage du verre.

## Revendications

1. Four hybride (10) pour la fabrication de verre, en particulier pour alimenter une unité de flottage du verre sur un bain de métal fondu, ledit four hybride (10) comportant d'amont en aval :
- une zone (100) de fusion électrique à voute froide (140) comportant des électrodes (110) pour fondre un mélange vitrifiable afin d'obtenir un bain (130) de verre ;
- une zone (200) d'affinage et d'homogénéisation à voute chaude, comportant une première courroie (210) de convection et une deuxième courroie (220) de convection ; et
- une zone (300) de refroidissement du verre formée par un bassin (310) de conditionnement qui, parcourue par ladite deuxième courroie (220) de convection, comporte au moins un canal (400) d'écoulement,
**caractérisé en ce que** la zone (100) de fusion électrique et la zone (200) d'affinage et d'homogénéisation du verre sont reliées par un corset (160) et **en ce que** le four hybride (10) comporte un dispositif (170) de séparation entre la zone (100) de fusion électrique et la zone (200) d'affinage et d'homogénéisation qui est en particulier apte à empêcher un retour du verre fondu de la zone (200) d'affinage et d'homogénéisation vers ladite zone (100) de fusion, ledit dispositif (170) de séparation étant positionné au niveau dudit corset (160), de préférence au niveau de l'extrémité amont du corset (160) et comportant un barrage (172) qui est en partie immergé dans le bain (130) de verre.

2. Four selon la revendication 1, **caractérisé en ce que** les électrodes (110) sont agencées en surface de manière à plonger dans le mélange vitrifiable, lesdites électrodes (110) plongeantes s'étendant de préférence verticalement.

3. Four selon la revendication 1, **caractérisé en ce que** les électrodes (110) sont agencées à travers une sole (150) de la zone (100) de fusion de manière à être immergées dans le mélange vitrifiable, lesdites électrodes (110) montantes s'étendant de préférence verticalement.

4. Four selon l'une des revendications 1 ou 2, **caractérisé en ce que** la zone (100) de fusion électrique comporte une zone de faible convection, dite zone tampon (134), située entre l'extrémité libre des électrodes (110) plongeantes et une sole (150) de la zone (100) de fusion.

5. Four selon la revendication 4, **caractérisé en ce que** la zone (100) de fusion est configurée pour présenter une profondeur (P) déterminée de manière à obtenir ladite zone tampon (134) de faible convection, de préférence la profondeur (P) est supérieure à 600 mm, voire préférentiellement supérieure à 800 mm.

6. Four selon l'une quelconque des revendications précédentes, **caractérisé en ce que** le barrage (172) est monté mobile verticalement pour permettre d'en régler la profondeur d'immersion dans le bain (130) de verre de sorte que la section du passage du verre fondu est susceptible de varier en fonction du réglage de la profondeur du barrage (172).

7. Four selon l'une quelconque des revendications précédentes, **caractérisé en ce que** le barrage (172) est amovible, c'est-à-dire démontable, afin notamment d'en permettre le changement en cas d'usure et de faciliter la maintenance du four.

8. Four selon l'une quelconque des revendications précédentes, **caractérisé en ce que** le dispositif (170) de séparation comporte un moyen (174) de séparation pour séparer l'atmosphère de la zone (100) de fusion électrique à voûte froide et l'atmosphère de la zone (200) d'affinage et d'homogénéisation à voûte chaude.

9. Four selon l'une quelconque des revendications précédentes, **caractérisé en ce que** la première courroie (210) de convection et la deuxième courroie (220) de convection sont séparées par une zone (230) d'inversion des courroies (210, 220) déterminée par un point chaud ou source correspondant au point le plus chaud du verre et **en ce que** la zone (200) d'affinage et d'homogénéisation comporte au moins un brûleur (215) qui est agencé pour obtenir ledit point chaud déterminant ladite zone (230) d'inversion des courroies.

10. Four selon la revendication 9, **caractérisé en ce que** le four hybride (10) comporte un muret (260) qui est agencé dans ladite zone (230) d'inversion des courroies.

11. Four selon l'une quelconque des revendications précédentes, **caractérisé en ce que** le four hybride (10) comporte une variation (270, 370) de la profondeur de la sole (250, 350) par rapport à la surface (S) du verre dans la zone (200) d'affinage et d'homogénéisation, de préférence au moins une élévation (272, 322, 332) voire une dénivellation, ladite variation (270, 370) de profondeur étant située dans la partie comprenant la première courroie (210) de convection et/ou dans la partie comprenant la deuxième courroie (220) de convection.

12. Four selon l'une quelconque des revendications précédentes, **caractérisé en ce que** le four hybride (10) comporte des moyens de modulation tels que du « boosting » électrique et/ou des bouillonneurs qui, agencés dans la zone (200) d'affinage et d'homogénéisation, sont aptes à permettre de moduler la convection desdites courroies (210, 220) afin de faciliter la conduite de la fabrication du verre.

13. Four selon l'une quelconque des revendications précédentes, **caractérisé en ce que** le bassin (310) de conditionnement de la zone (300) de refroidissement comprend, d'amont en aval, un corset (320) puis une braise (330).

14. Four selon l'une quelconque des revendications précédentes, **caractérisé en ce que** le four hybride (10) est apte à délivrer un verre de haute qualité présentant moins de 0,1 bulle par litre, préférentiellement moins 0,05 bulle par litre.

15. Procédé de fabrication de verre dans un four hybride (10) selon l'une quelconque des revendications précédentes, ledit procédé de fabrication comportant successivement les étapes consistant à :
(a) - fondre un mélange vitrifiable dans une zone (100) de fusion électrique à voûte froide pour obtenir du verre fondu ;
(b) - affiner et homogénéiser ledit verre fondu dans une zone (200) d'affinage et d'homogénéisation à voute chaude comportant une première courroie (210) de convection et une deuxième courroie (220) de convection ;
(c) - refroidir le verre dans une zone (300) de refroidissement qui, formée par un bassin (310) de conditionnement, est parcourue par la deuxième (220) courroie de convection,
**caractérisé en ce que** le procédé comporte une étape (d) de réglage consistant à régler la profondeur d'un barrage (172) mobile qui, immergé dans le verre, est agencé dans un corset (160) reliant la zone (100) de fusion électrique à la zone (200) d'affinage et d'homogénéisation, pour contrôler le débit de verre fondu prélevé dans la zone (100) de fusion électrique.
